# EUROPEAN PATENT SPECIFICATION

(11) **EP 3 413 037 B1**
(45) Date of publication and mention of the grant of the patent: **03.05.2023**
(21) Application number: 16889441.8
(22) Date of filing: 22.12.2016
(51) Int. Cl.: G01N 21/892, G01B 11/30, G01B 11/25, G01N 21/896, G06T 7/00

(54) **INSPECTION DEVICE FOR SHEET-LIKE OBJECTS, AND INSPECTION METHOD FOR SHEET-LIKE OBJECTS**
PRÜFEINRICHTUNG FÜR BLATTFÖRMIGE OBJEKTE UND PRÜFVERFAHREN FÜR BLATTFÖRMIGE OBJEKTE
DISPOSITIF D'INSPECTION POUR OBJETS EN FEUILLES, ET PROCÉDÉ D'INSPECTION POUR OBJETS EN FEUILLES

(30) Priority: 05.02.2016 JP 2016020526
(43) Date of publication of application: 12.12.2018
(73) Proprietor: Toray Industries, Inc., Tokyo 103-8666 (JP)
(72) Inventor: IKEDA, Keita, Otsu-shi Shiga 520-8558 (JP); SUGIHARA, Hiroki, Otsu-shi Shiga 520-8558 (JP); NAKATA, Kazuki, Otsu-shi Shiga 520-8558 (JP)
(74) Representative: Hoefer & Partner Patentanwälte mbB
(86) International application number: PCT/JP2016/088544
(87) International publication number: WO 2017/134958

(56) References cited:
- JP-A- H0 599 639
- JP-A- H04 178 545
- JP-A- H06 137 845
- JP-A- H10 115 514
- JP-A- H11 337 504
- JP-A- 2001 201 429
- JP-A- 2002 139 447
- JP-A- 2004 184 397
- JP-A- 2005 257 681
- JP-A- 2011 145 082
- JP-A- 2015 172 565
- JP-B1- S5 210 036
- US-A- 6 075 591

## Description

### Field

The present invention relates to an inspection device for a sheet object and an inspection method for a sheet object capable of accurately inspecting irregularities on an surface of the sheet object.

### Background

A sheet object having optical transparency such as a film is widely used in various industries. With diversified usage, a demand for improved film quality is becoming more and more challenging. For example, when a film is used as a component of a liquid crystal display such as a liquid crystal polarizing plate and a phase difference plate, or as various optical films such as a plasma display panel (PDP) member, a touch panel member, and a laminated glass member, the sheet object is required to have excellent transparency and film surface quality.

Conventionally, to inspect whether a defect is present on a sheet object, there has been known a method for detecting irregularities on a surface of the sheet object in which an irradiation unit irradiates, with light, the sheet object that is continuously conveyed, and an image capture unit receives transmitted light or reflected light from the sheet object. For example, methods disclosed in Patent Literatures 1 and 2 are known.

In the method disclosed in Patent Literature 1, an irradiation unit emits light from one surface side of an inspection body, an image capture unit disposed facing the other surface of the inspection body captures an image of transmitted light from the inspection body, and a data processing unit detects an irregularly shaped defect present on the surface of the inspection body. In this process, detection sensitivity of the irregularly shaped defect is improved by installing the irradiation unit and the image capture unit such that the longitudinal direction of the irradiation unit and the scanning direction of the image capture unit are inclined at a certain angle with respect to the width direction of the inspection body.

In the method disclosed in Patent Literature 2, an irradiation unit irradiates an inspection body with parallel light, light that has transmitted through the inspection body is projected on a screen installed at the opposite side of the irradiation unit relative to the surface of the inspection body, and an image capture unit captures an image of the light projected on the screen from a dark field side, so that an irregularly shaped defect is detected. In this process, a point light source is used as the irradiation unit to emit light close to parallel light, thereby emphasizing the shadow of light that has transmitted through the defect portion. From US 6 075 591 A, an optical method and apparatus for detecting low frequency defects is known, in which a diverging beam of inspection radiation is provided and directed on the optical object so that each point thereof is illuminated at a single angle. The beam is projected through the optical object on a projection screen and thereby a shadow pattern thereof is obtained.

From JP 2002 139447 A, an apparatus and a method are known wherein a very small irregularity flaw whose irregularity part is about several um can be detected surely even in an object, to be inspected, whose surface roughness is coarse. Therein, the surface of a steel plate is irradiated with convergent light at a wavelength in a visible range at a large angle of incidence θ of near 90°. Light which is reflected by the surface of the steel plate forms an image on a semitransparent screen.

In JP 2004 184397 A, a light band is formed on the surface of a band-like body to be inspected by irradiating the surface of the band-like body with a band-like light traversing the band-like body. A reflection image of the light band reflected on the surface of the band-like body is projected on a screen.

In JP 2005 257681 A, diffusion light is emitted toward an inspection objective area on a surface of an inspection object by a light source having prescribed spreading. An illumination limited area for shielding the light from a partial area of the light source but not shielding light from the other area is formed within the inspection objective area by a light shielding body interposed between the light source and the inspection objective area.

In JP H11 337504 A, a glass sheet that is carried and moved is irradiated with light from light sources provided under the glass sheet. A line camera scans and shoots the glass sheet in a direction orthogonal to the glass sheet carrying direction. In JP 2001 201429 A, an inspected base body is irradiated with an irradiation light, which is a plane wave or is as close to a plane wave as possible for projecting a diffraction pattern image of the surface of internal defect of the inspected base body on a screen.

### Citation List

### Patent Literature

Patent Literature 1: Japanese Laid-open Patent Publication No. 2009-025269
Patent Literature 2: Japanese Laid-open Patent Publication No. 2005-241586

### Summary

### Technical Problem

However, Patent Literature 1 and Patent Literature 2 have the following problems. With the method disclosed in Patent Literature 1, a larger installation space is needed when a single irradiation unit and a single image capture unit are used to inspect all width directions of the inspection body, because the irradiation unit and
the image capture unit need to be installed so that the longitudinal direction of the irradiation unit and the scanning direction of the image capture unit can be inclined at a certain angle with respect to the width direction of the inspection body. Alternatively, when a plurality of irradiation units and image capture units are arranged in the width direction of the inspection body to reduce the installation space, a difference in detection sensitivities of an irregularly shaped defect is generated in the width direction of the inspection body, due to a difference between respective irradiation units and image capture units, and different installation accuracy. When the number of units are increased, adjustment of detection sensitivity becomes difficult to perform, requiring a large amount of effort.

In the method disclosed in Patent Literature 2, the point light source is used as the irradiation unit, and light with a certain irradiation angle is emitted. Thus, to inspect all width directions of the inspection body, a larger distance is needed between the inspection body and the irradiation unit, thereby reducing the light intensity as much as the distance increases. Thus, it is not possible to secure sufficient light amount for inspection. Consequently, the detection sensitivity of the irregularly shaped object will be reduced or a large number of the irradiation units will be required.

An object of the present invention is to solve the problems of conventional technologies described above, and to provide an inspection device for a sheet object and an inspection method for a sheet object capable of accurately inspecting irregularities on a surface of the sheet object.

### Solution to Problem

The solution of this object is achieved by the features of the inspection device for a sheet object according to independent claim 1. The dependent claims contain advantageous embodiments of the present invention.

It is preferable that the inspection device for the sheet object according to the present invention has the following configuration:
the defect to be detected by the data processing unit has an irregular shape extending in the same direction as the conveyance direction of the sheet object;
a surface parallel to the traveling surface of the sheet object and a line parallel to the longitudinal direction of the irradiation unit are in parallel with each other; or
the irradiation unit, the projection unit, and the image capture unit are installed outside a region extending in a direction perpendicular to the traveling surface of the sheet object, while keeping a sheet width of the sheet object.

The solution of the aforementioned object is also achieved by the features of the inspection method for a sheet object according to independent claim 4. The dependent claims contain advantageous embodiments of the present invention.

It is preferable that the inspection method for the sheet object according to the present invention includes the following step:
an irregular shape extending in the same direction as the conveyance direction of the sheet object is detected as the defect;
light to be emitted from the light source is emitted so that an optical axis of the light is perpendicular to the conveyance direction of the sheet object; or
light is emitted from outside of a region extending in a direction perpendicular to a traveling surface of the sheet object, while a sheet width of the sheet object is being kept, and a projection image of transmitted light or reflected light is projected outside the region.

### Advantageous Effects of Invention

With the present invention, it is possible to implement an inspection device for a sheet object and an inspection method for a sheet object capable of accurately inspecting irregularities on a surface of the sheet object. Brief Description of Drawings

FIG. 1 is a perspective view illustrating a configuration of an inspection device of an embodiment of the present invention.
FIG. 2 is a perspective view illustrating a configuration of an inspection device different from that of the present invention, when the longitudinal direction of an irradiation unit and the conveyance direction of the sheet object are orthogonal to each other.
FIG. 3A is an arrow view illustrating the principle of the embodiment of the present invention as viewed from the sheet conveyance direction.
FIG. 3B is an arrow view illustrating the principle of the embodiment of the present invention as viewed from the sheet width direction.
FIG. 3C is an arrow view illustrating the principle of the embodiment different from the present invention as viewed from the sheet conveyance direction.
FIG. 3D is an arrow view illustrating the principle of the embodiment different from the present invention as viewed from the sheet width direction.
FIG. 4A is an arrow view illustrating the principle of the embodiment of the present invention as viewed from the sheet conveyance direction.
FIG. 4B is an arrow view illustrating the principle of the embodiment of the present invention as viewed from the sheet width direction
FIG. 4C is an arrow view illustrating the principle of the embodiment different from the present invention as viewed from the sheet conveyance direction.
FIG. 4D is an arrow view illustrating the principle of the embodiment different from the present invention as viewed from the sheet width direction.
FIG. 5A is an arrow view illustrating the principle of the embodiment of the present invention as viewed from the sheet width direction.
FIG. 5B is an arrow view illustrating the principle of the embodiment of the present invention as viewed from the sheet conveyance direction.
FIG. 5C is an arrow view illustrating the principle of the embodiment of the present invention as viewed from the sheet width direction.
FIG. 5D is an arrow view illustrating the principle of the embodiment of the present invention as viewed from the sheet conveyance direction.
FIG. 6A is an arrow view illustrating a configuration of an inspection device of another embodiment of the present invention as viewed from the sheet conveyance direction.
FIG. 6B is an arrow view illustrating a configuration of an inspection device of the other embodiment of the present invention as viewed from the sheet conveyance direction.
FIG. 6C is an arrow view illustrating a configuration of an inspection device of the other embodiment of the present invention as viewed from the sheet conveyance direction.
FIG. 6D is an arrow view illustrating a configuration of an inspection device of the other embodiment of the present invention as viewed from the sheet conveyance direction.
FIG. 7A is an arrow view illustrating a configuration of an inspection device of another embodiment of the present invention as viewed from the sheet conveyance direction.
FIG. 7B is an arrow view illustrating a configuration of an inspection device of the other embodiment of the present invention as viewed from the sheet conveyance direction.
FIG. 7C is an arrow view illustrating a configuration of an inspection device of the other embodiment of the present invention as viewed from the sheet conveyance direction.
FIG. 7D is an arrow view illustrating a configuration of an inspection device of the other embodiment of the present invention as viewed from the sheet conveyance direction.
FIG. 8 is a diagram illustrating measurement results of the first example.
FIG. 9 is a diagram illustrating measurement results of the second example.
FIG. 10 is a diagram illustrating measurement results of the third example.

### Description of Embodiments

Hereinafter, embodiments of an inspection device for a sheet object and an inspection method for a sheet object according to the present invention will be described in detail with reference to the accompanying drawings. It should be noted that the invention is not limited to the embodiment.

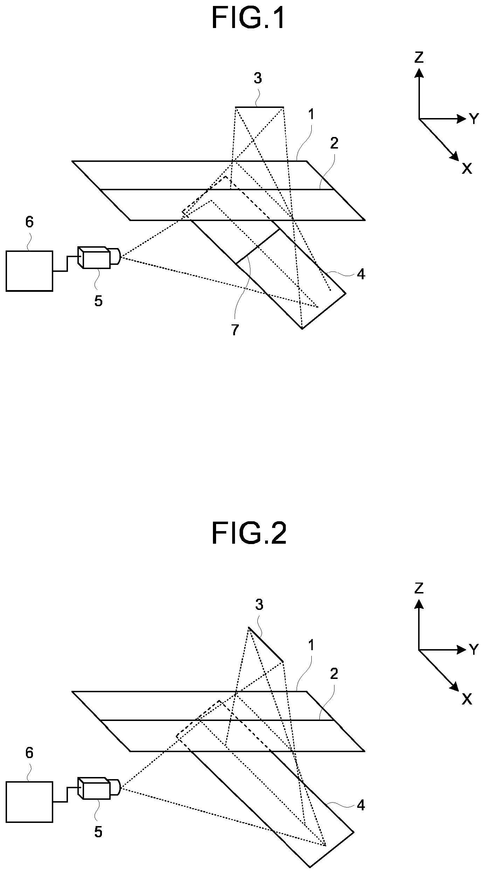

FIG. 1 is a perspective view illustrating a configuration of an inspection device for a sheet object of an embodiment of the present invention. A sheet object 1 being continuously conveyed is traveling in a sheet conveyance direction, which is a conveyance direction (Y direction) of the sheet object 1 at a regular speed. An irradiation unit 3 emits light toward a surface of the sheet object 1, and the light that has transmitted through the sheet object 1 or that has reflected from the sheet object 1 is projected on a projection unit 4. A projection image projected on the projection unit 4 is captured by an image capture unit 5, and is input in a data processing unit 6 as image data. A defect present on the sheet object 1 can be detected when the data processing unit 6 executes image processing on the image data using a computer program determined in advance. In addition to using the data processing unit 6, the defect can also be detected by visually confirming the projection image projected on the projection unit 4. In the following explanation, it is assumed that the surface (or a traveling surface, which will be described below) of the sheet object 1 to be conveyed is in parallel with an XY plane at a position where the inspection device is installed.

The irradiation unit 3 is a long irradiation unit that emits linear illumination light extending in one direction. When transmitted light is used for inspection, the irradiation unit 3 is disposed on one side of the traveling surface of the sheet object 1, and the projection unit 4 and the image capture unit 5 are disposed on the other side of the irradiation unit 3 with the sheet object 1 interposed therebetween. When reflected light is used for inspection, the irradiation unit 3, the projection unit 4, and the image capture unit 5 are disposed on one side of the traveling surface of the sheet object 1.

When the irradiation unit 3 is viewed from a direction perpendicular to the traveling surface of the sheet object 1 (Z direction), the irradiation unit 3 is disposed so that a longitudinal direction of the irradiation unit 3 is in parallel with the sheet conveyance direction. The irradiation unit 3 emits light spreading in a sheet width direction (X direction).

In the present invention, the "sheet object" is a sheet such as a film or an object having a plate shape, for example, but it is not limited thereto. However, when transmitted light from the sheet object is used for inspection, the sheet object should be transparent or semitransparent.

In the present invention, the "irradiation unit" indicates a linear light source extending in one direction, and it is preferable that a width of a direction perpendicular to a longitudinal direction and an optical axis direction of the irradiation unit is smaller than a width of a defect, to obtain a sharp projection image. For example, an irradiation unit in which a plurality of optical fibers, serving as point light sources, are linearly arranged is suitably used as the irradiation unit. However, it is not limited thereto, and an irradiation unit in which a slit is provided on the light source and the irradiation surface is in a linear shape, and the like, may also be used as the irradiation unit. In general, light energy of the point light source is attenuated in inverse proportion to the square of distance, but light energy of the linear light source is attenuated in inverse proportion to the distance. The linear light source is obtained by linearly arranging the point light sources. Thus, the light energy of linear light source is obtained by integrating the light energy of each of the point light sources. Hence, the linear light source can secure more light than that from the point light source, and it is possible to inspect a wide sheet object without lowering the inspection sensitivity, even if the distance between the irradiation unit and the sheet object is increased.

In the present invention, the "projection unit" is a unit for displaying a projection image so that the projection image can be visually captured, and for example, a screen for projecting a video image of a projector is suitably used as the projection unit. However, a sheet of paper, an opaque film, and the like may also be used.

In the present invention, an "image capture unit" is a unit capable of converting light to an electric signal, and for example, a line sensor camera in which a plurality of light receiving elements are one-dimensionally disposed is suitably used as the image capture unit. However, it is not limited thereto, and an area sensor camera, a photomultiplier tube, or other image capture unit in which the light receiving elements are two-dimensionally disposed may also be used as the image capture unit.

In the present invention, the "traveling surface of the sheet object" is a position through which the sheet object passes when being actually conveyed and a range in the sheet-width direction.

In the present invention, a "defect" is an irregular shaped matter extending in the same direction as the conveyance direction of the sheet object, and it is preferable that the defect be present on the surface of the sheet object, such as a stripe and a scratch.

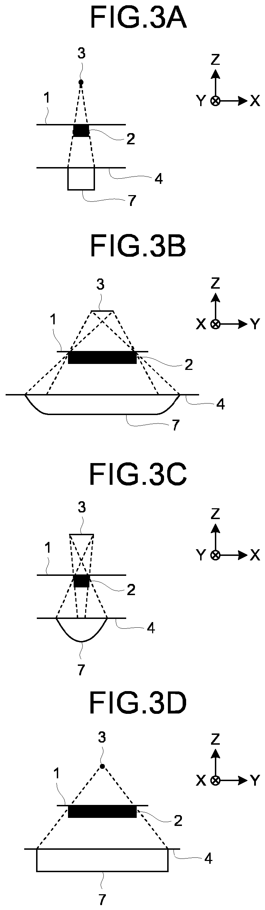

In this example, the detection principle of a defect will be described with reference to FIG. 1, FIG. 2, and FIGS. 3A to 3D. FIG. 1 is a diagram in which the longitudinal direction of the irradiation unit 3 and the sheet conveyance direction (Y direction) are disposed in the same direction. FIG. 2 is a diagram in which the longitudinal direction of the irradiation unit 3 and the sheet width direction (X direction) of the sheet object 1 are disposed in the same direction. FIG. 3A is an arrow view (hereinafter, referred to as a sheet conveyance direction Y arrow view) illustrating a relation between a defect 2 and a projection image 7 in the configuration of FIG. 1, viewed from the sheet conveyance direction (Y direction). FIG. 3B is an arrow view (hereinafter, referred to as a sheet width direction X arrow view) illustrating a relation between the defect 2 and the projection image 7 in the configuration of FIG. 1, viewed from the sheet width direction (X direction). FIG. 3C is a sheet conveyance direction Y arrow view illustrating a relation between the defect 2 and the projection image 7 in the configuration of FIG. 2. FIG. 3D is a sheet width direction X arrow view illustrating a relation between the defect 2 and the projection image 7 in the configuration of FIG. 2.

First, how the projection image 7 of the defect 2 can be seen in the configuration of FIG. 1 will be described. As illustrated in FIG. 3A, because the irradiation unit 3 has no length and the light emitting point (irradiation unit 3 in FIG. 3A) is smaller than the width of the defect 2 (hereinafter, may also be referred to as defect width), the irradiation unit 3 can be assumed as the point light source. Thus, the projection image 7 of the defect 2 can be projected sharply without the edge being blurred. As illustrated in FIG. 3B, the irradiation unit 3 has length, but the light emitting point is smaller than the defect length. Thus, the edge of the projection image 7 of the defect 2 is blurred, but the effect on sharpness is small as a whole.

Next, how the projection image 7 of the defect 2 can be viewed in the configuration of FIG. 2 will be described. As illustrated in FIG. 3C, the irradiation unit 3 has length in the X direction, and the light emitting point is larger than the defect width. Thus, the projection image 7 of the defect 2 will be blurred as a whole. As illustrated in FIG. 3D, because the irradiation unit 3 has no length in the X direction and the light emitting point is smaller than the defect length, the irradiation unit 3 can be assumed as the point light source. Thus, the projection image 7 of the defect 2 can be projected sharply without being blurred. In reality, the projection image 7 is formed when the light that has transmitted through the sheet object 1 is refracted. However, for easy understanding, the projection image 7 is expressed as a shadow of the defect 2.

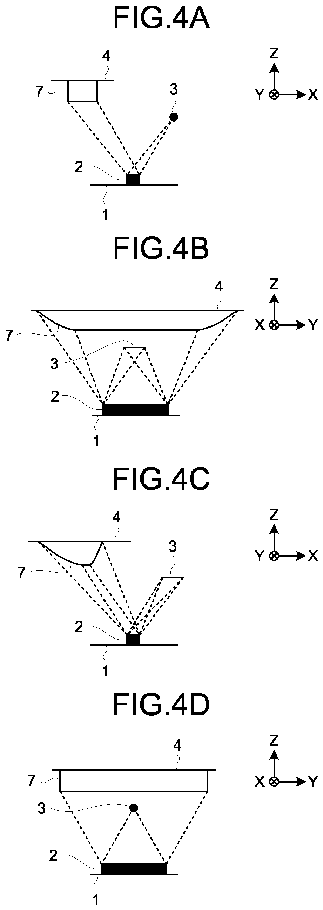

The above explanation is made on the configuration in which the irradiation unit 3 and the projection unit 4 are placed at different sides with each other on the basis of the traveling surface of the sheet object 1, and the transmitted light of the sheet object 1 is projected onto the projection unit 4. Alternatively, the detection principle of a defect in the configuration in which the irradiation unit 3 and the projection unit 4 are placed on the same side on the basis of the traveling surface of the sheet object 1, and the reflected light of the sheet object 1 is projected on the projection unit 4 will be described with reference to FIG. 4A to FIG. 4D. FIG. 4A is a sheet conveyance direction Y arrow view illustrating a relation between the defect 2 and the projection image 7, in a configuration in which the longitudinal direction of the irradiation unit 3 and the sheet conveyance direction (Y direction) are disposed in the same direction. FIG. 4B is a sheet width direction X arrow view illustrating a relation between the defect 2 and the projection image 7, in a configuration in which the longitudinal direction of the irradiation unit 3 and the sheet conveyance direction (Y direction) are disposed in the same direction. FIG. 4C is a sheet conveyance direction Y arrow view illustrating a relation between the defect 2 and the projection image 7, in a configuration in which the longitudinal direction of the irradiation unit 3 and the sheet width direction (X direction) of the sheet object 1 are disposed in the same direction. FIG. 4D is a sheet width direction X arrow view illustrating a relation between the defect 2 and the projection image 7, in a configuration in which the longitudinal direction of the irradiation unit 3 and the sheet width direction (X direction) of the sheet object 1 are disposed in the same direction.

In FIG. 4A, similar to FIG. 3A, the projection image 7 of the defect 2 can be projected sharply without the edge being blurred. In FIG. 4B, similar to FIG. 3B, the edge of the projection image 7 of the defect 2 is blurred, but the effect on sharpness is small as a whole. In FIG. 4C, similar to FIG. 3C, the projection image 7 of the defect 2 will be blurred as a whole. In FIG. 4D, similar to FIG. 3D, the projection image 7 of the defect 2 can be projected sharply without being blurred.

The defect 2 in the present invention is an irregularity extending in the same direction as that of the sheet conveyance direction (Y direction), and is minute when viewed from the sheet conveyance direction (Y direction), but is large when viewed from the sheet width direction (X direction). Thus, even if the edge of the projection image viewed from the sheet width direction X is blurred, the detection of the defect 2 will not be affected, and stable detection is possible as long as the projection image 7 viewed from the sheet conveyance direction (Y direction) is sharp.

By applying this principle, an image of a minute defect such as a scratch, which will be noise when the defect is detected by the data processing unit 6, can be captured by the image capture unit 5, and the defect can be removed at the point when the image data is obtained. In other words, depending on the generation direction of the defect, it is possible to obtain image data that is an image of the selectively captured defect.

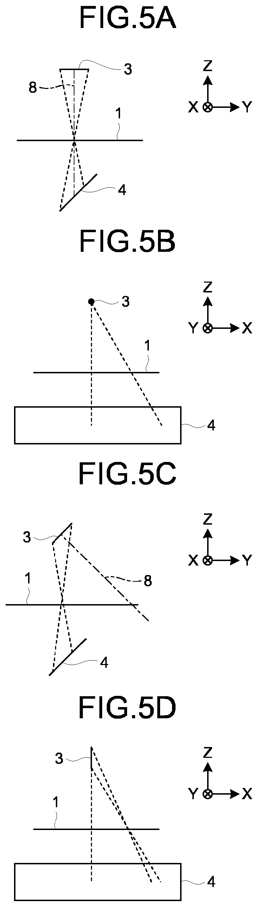

In FIG. 5A, a surface parallel to the traveling surface of the sheet object 1 and a line parallel to the longitudinal direction of the irradiation unit 3 are in parallel with each other. In other words, FIG. 5A is a sheet width direction X arrow view in a configuration in which an optical axis 8 of light to be emitted is perpendicular to the sheet conveyance direction (Y direction) of the sheet object 1. Moreover, FIG. 5B is a sheet conveyance direction Y arrow view at the time. In FIG. 5C, a surface parallel to the traveling surface of the sheet object 1 and a line parallel to the longitudinal direction of the irradiation unit 3 are not in parallel with each other. In other words, FIG. 5C is a sheet width direction X arrow view in which the optical axis 8 of light to be emitted is not perpendicular to the sheet conveyance direction (Y direction) of the sheet object 1. Moreover, FIG. 5D is a sheet conveyance direction Y arrow view at the time.

In FIG. 5B, because the irradiation unit 3 has no length relative to a direction 2 perpendicular to the traveling surface of the sheet object 1, and the light emitting point is smaller than the defect width, the irradiation unit 3 can be assumed as the point light source. Thus, the projection width of the defect 2 will not be blurred, not only when the defect 2 described above is directly below the irradiation unit 3, but also when the defect 2 is at the edge in the sheet width direction (X direction). Alternatively, in FIG. 5D, because the irradiation unit 3 has length relative to the direction (Z direction) perpendicular to the traveling surface of the sheet object 1, the light emitting point becomes larger than the defect width. Thus, although the projection width will not be blurred when the defect 2 is directly below the irradiation unit 3, the blurring condition of the projection width becomes significant toward the edge in the sheet width direction (X direction). Consequently, in the configuration of FIGS. 5A and 5B, in other words, with a configuration in which the surface parallel to the traveling surface of the sheet object 1 and the line parallel to the longitudinal direction of the irradiation unit 3 are in parallel with each other, the defect 2 can be sharply projected in the sheet width direction (X direction), thereby enabling stable detection.

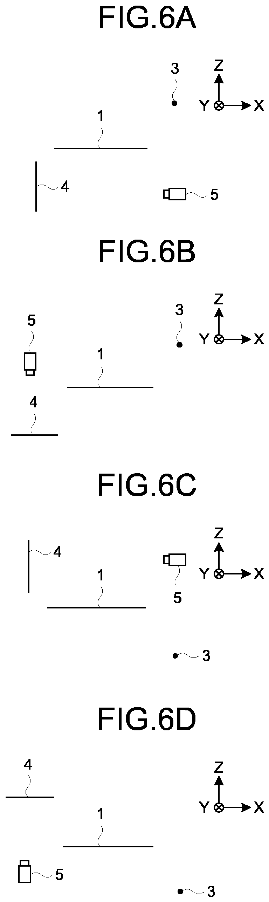

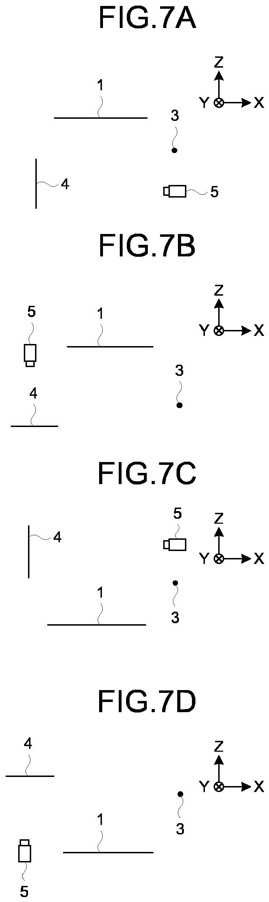

FIG. 6A to FIG. 6D and FIG. 7A to FIG. 7D are sheet conveyance direction Y arrow views illustrating various configurations in which the irradiation unit 3, the projection unit 4, and the image capture unit 5 are installed outside a region extending in the direction perpendicular to the traveling surface (XY plane) of the sheet object, while keeping the sheet width of the sheet object 1 (area of the sheet object 1 in the X direction). In FIG. 6A to FIG. 6D, transmitted light of the sheet object 1 is projected on the projection unit 4. In FIG. 7A to FIG. 7D, reflected light of the sheet object 1 is projected on the projection unit 4. As illustrated in FIG. 6A to FIG. 6D and FIG. 7A to FIG. 7D, when the units are installed at the positions away from the upper and lower portions of the sheet object 1, it is possible to easily install or remove the units during the production of the sheet object 1. It is also possible to easily obtain generation status of defects at the start of production, and the like. In case when one of the units is dropped off due to failure of a fixing tool and the like, there is no fear of damaging the sheet object 1.

### Examples

Hereinafter, an embodiment of the present invention will be described with reference to examples.

### First Example

In the following first example of the present embodiment, difference in detection sensitivities depending on the length of the irradiation unit in the longitudinal direction was examined.

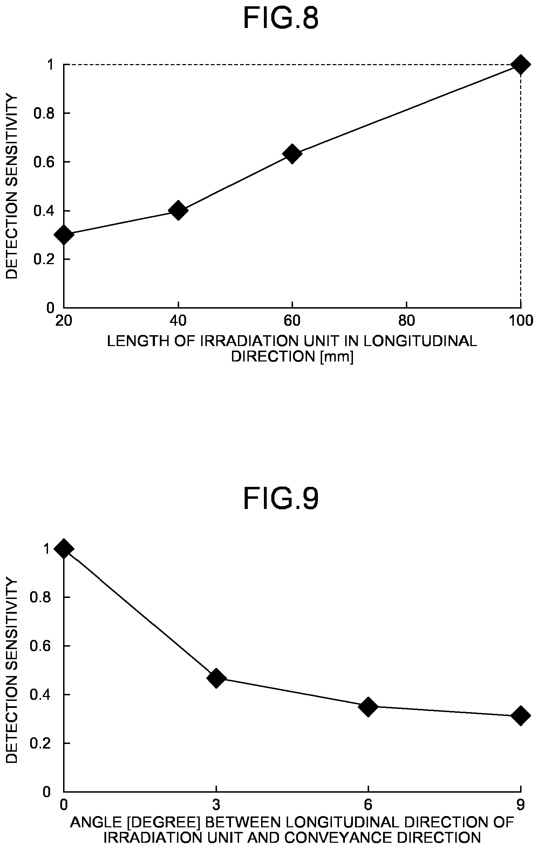

A device having the same configuration as that of FIG. 1 was used. The optical fiber UKG 100-1500S-HR and the LED light source UFLS-75-08W-T manufactured by U-Technology were used as the irradiation unit. The screen KPM-80 manufactured by PLUS Vision was used as the projection unit. The line sensor camera raL12288-8gm manufactured by Basler was used as the image capture unit. A personal computer connected to the image capture unit was used as the data processing unit. As illustrated in FIG. 1, the irradiation unit was installed so that the longitudinal direction of the irradiation unit and the conveyance direction of a stripe sample can be the same direction. By narrowing the interval between the slits provided in the irradiation unit, the lengths of the irradiation unit in the longitudinal direction are set to 100 mm, 60 mm, 40 mm, and 20 mm, and each projection image projected on the projection unit was captured by the image capture unit. Evaluation of the detection sensitivity of the stripe was made on the image data obtained in such a manner. The evaluation was carried out using the brightness value of each pixel, and FIG. 8 is the results of evaluating a difference (S - M) between the average brightness M of a normal portion without a stripe (formation) and the maximum brightness value S at the stripe. The evaluation values are normalized on the basis of 100 mm. The sensitivity is maximum at 100 mm, and the present example indicates that it is possible to increase the detection sensitivity of the stripe defect to be detected.

### Second Example

In the following second example of the present embodiment, difference in detection sensitivities depending on the relation between the longitudinal direction of the irradiation unit and the conveyance direction of the sheet object was examined.

A device having the same configuration as that of FIG. 1 was used. The optical fiber UKG 100-1500S-HR and the LED light source UFLS-75-08W-T manufactured by U-Technology were used as the irradiation unit. The screen KPM-80 manufactured by PLUS Vision was used as the projection unit. The line sensor camera raL12288-8gm manufactured by Basler was used as the image capture unit. A personal computer connected to the image capture unit was used as the data processing unit. As illustrated in FIG. 1, the angle was set to 0 degrees when the longitudinal direction of the irradiation unit and the conveyance direction of the stripe sample can be the same direction. The image capture unit captured each projection image projected on the projection unit, by shifting the difference between the longitudinal direction of the irradiation unit and the conveyance direction of the stripe sample by 3 degrees within a range from 0 to 9 degrees. Evaluation of the detection sensitivity of the stripe was made on the image data obtained in such a manner. The evaluation was carried out using the brightness value of each pixel, and FIG. 9 is the result of evaluating a difference (S - M) between the average brightness M of a normal portion without a stripe (formation) and the maximum brightness value S at the stripe. The evaluation value is normalized on the basis of 0 degree. The sensitivity is maximum at 0 degree, and the present example indicates that it is possible to increase the detection sensitivity of the stripe defect to be detected.

### Third Example

In the following third example of the present embodiment, difference in detection sensitivities depending on the relation between the optical axis of the irradiation unit and the conveyance direction of the sheet object was examined.

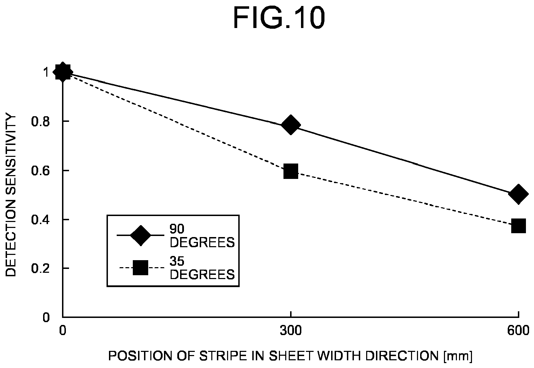

A device having the same configuration as that of FIG. 1 was used. The optical fiber UKG 50-1500S-HR and the LED light source UFLS-75-08W-T manufactured by U-Technology were used as the irradiation unit. The screen KPM-80 manufactured by PLUS Vision was used as the projection unit. The line sensor camera raL12288-8gm manufactured by Basler was used as the image capture unit. A personal computer connected to the image capture unit was used as the data processing unit. As illustrated in FIGS. 5A and 5C, the detection sensitivities of a stripe were compared, when the angles of the optical axis of light to be emitted from the irradiation unit relative to the conveyance direction of the stripe sample are 90 degrees and 35 degrees. The position of the stripe sample directly below the irradiation unit (downward position in the Z direction from the center of the irradiation unit 3) was set to 0 mm. The image capture unit captured each projection image of the stripe sample projected on the projection unit at every 300 mm in the sheet width direction (X direction) within a range from 0 mm to 600 mm. Evaluation of the stripe was made on the image data obtained in such a manner. The evaluation was carried out using the brightness value of each pixel, and FIG. 10 is the result of evaluating a difference (S - M) between the average brightness M of a normal portion without a stripe (formation) and the maximum brightness value S at the stripe. The evaluation value is normalized on the basis of 0 degree. The detection sensitivity of the stripe in the sheet width direction was prevented from lowering at 90 degrees. Thus, the present example indicates that it is possible to increase the detection sensitivity of the stripe defect to be detected.

### Industrial Applicability

The present invention can also be applied to inspecting irregularities generated on a surface of a sheet object that does not have optical transparency such as a steel plate, in addition to inspecting irregularities generated on a surface of a sheet object that has optical transparency such as a film. However, the application range is not limited thereto, since the full scope of protection of the present invention is only limited by the appended claims.

### Reference Signs List

- 1: sheet object
- 2: defect
- 3: irradiation unit
- 4: projection unit
- 5: image capture unit
- 6: data processing unit
- 7: projection image
- 8: optical axis

## Claims

1. An inspection device for a sheet object (1) that is continuously conveyed, the inspection device comprising:
a linear light source (3) which extends in a longitudinal direction, wherein the linear light source is configured to irradiate the sheet object (1) with irradiation light;
a projection unit (4) onto which transmitted light or reflected light from the sheet object is projected;
an image capture unit (5) configured to capture a projection image (7) projected on the projection unit (4); and
a data processing unit (6) configured to detect a defect present on the sheet object (1) from image data captured by the image capture unit (5), wherein
the longitudinal direction of the linear light source (3) viewed from a direction (z direction) perpendicular to a traveling surface of the sheet object (1) is the same as a conveyance direction (y direction) of the sheet object (1), and the linear light source (3) is configured to emit light spreading in a sheet width direction(x direction) of the sheet object (1).

2. The inspection device for the sheet object (1) according to claim 1, wherein the inspection device is arranged such that a surface parallel to the traveling surface of the sheet object (1) and a line parallel to the longitudinal direction of the linear light source (3) are in parallel with each other.

3. The inspection device for the sheet object (1) according to claim 1 or 2, wherein the linear light source (3), the projection unit (4), and the image capture unit (5) are arranged such that they can be installed outside a region extending in a direction perpendicular to the traveling surface of the sheet object (1), while keeping a sheet width of the sheet object (1).

4. An inspection method for a sheet object (1), the inspection method comprising:
emitting light spreading in a sheet width direction (x direction) on the sheet object (1) that is continuously conveyed, from a linear light source (3) whose longitudinal direction extends in a same direction as a conveyance direction (y direction) of the sheet object (1) when viewed from a direction (z direction) perpendicular to the sheet object (1); and
projecting transmitted light that is the emitted light transmitted through the sheet object or reflected light that is the emitted light reflected from a surface of the sheet object (1) onto a projection unit (4), capturing a projection image projected onto the projection unit (4) with an image capture unit (5), and
detecting a defect present on the sheet object (1) from the projection image (7) projected onto the projection unit (4).

5. The inspection method for the sheet object (1) according to claim 4, wherein an irregular shape extending in the same direction as the conveyance direction of the sheet object (1) is detected as the defect.

6. The inspection method for the sheet object (1) according to claim 4 or 5, wherein light to be emitted from the linear light source (3) is emitted so that an optical axis (8) of the light is perpendicular to the conveyance direction of the sheet object (1).

7. The inspection method for the sheet object (1) according to any one of claims 4 to 6, wherein light is emitted from outside of a region extending in a direction perpendicular to a traveling surface of the sheet object (1), while a sheet width of the sheet object (1) is being kept, and a projection image (7) of transmitted light or reflected light is projected onto the projection unit (4) outside the region.

## Patentansprüche

1. Inspektionsvorrichtung für ein blattförmiges Objekt (1), das kontinuierlich transportiert wird, wobei die Inspektionsvorrichtung aufweist:
eine lineare Lichtquelle (3), die sich in einer longitudinalen Richtung erstreckt, wobei die lineare Lichtquelle konfiguriert ist, um das blattförmige Objekt (1) mit Bestrahlungslicht zu bestrahlen;
eine Projektionseinheit (4), auf die transmittiertes Licht oder reflektiertes Licht von dem blattförmigen Objekt projiziert ist;
eine Bilderfassungseinheit (5), die konfiguriert ist, um ein Projektionsbild (7) zu erfassen, das auf die Projektionseinheit (4) projiziert ist; und
eine Datenverarbeitungseinheit (6), die konfiguriert ist, um einen auf dem blattförmigen Objekt (1) vorhandenen Defekt aus Bilddaten zu erfassen, die von der Bilderfassungseinheit (5) erfasst ist, wobei
die longitudinale Richtung der linearen Lichtquelle (3), betrachtet aus einer Richtung (z-Richtung) senkrecht zu einer sich bewegenden Oberfläche des blattförmigen Objekts (1), dieselbe ist wie eine Transportrichtung (y-Richtung) des blattförmigen Objekts (1), und die lineare Lichtquelle (3) konfiguriert ist, um Licht zu emittieren, das sich in einer Blattbreitenrichtung (x-Richtung) des blattförmigen Objekts (1) ausbreitet.

2. Inspektionsvorrichtung für das blattförmige Objekt (1) nach Anspruch 1, wobei die Inspektionsvorrichtung eingerichtet ist, sodass eine zur Bewegungsfläche des blattförmigen Objekts (1) parallele Fläche und eine zur longitudinalen Richtung der linearen Lichtquelle (3) parallele Linie parallel zueinander verlaufen.

3. Inspektionsvorrichtung für das blattförmige Objekt (1) nach Anspruch 1 oder 2, wobei die lineare Lichtquelle (3), die Projektionseinheit (4) und die Bildaufnahmeeinheit (5) eingerichtet sind, sodass sie außerhalb eines Bereichs installierbar sind, der sich in einer Richtung senkrecht zu der sich bewegenden Oberfläche des blattförmigen Objekts (1) erstreckt, wobei eine Blattbreite des blattförmigen Objekts (1) gehalten ist.

4. Inspektionsverfahren für ein blattförmiges Objekt (1), wobei das Inspektionsverfahren aufweist:
Emittieren von Licht, das sich in einer Blattbreitenrichtung (x-Richtung) auf dem blattförmigen Objekt (1) ausbreitet, das kontinuierlich transportiert wird, von einer linearen Lichtquelle (3), deren longitudinale Richtung sich in derselben Richtung wie eine Transportrichtung (y-Richtung) des blattförmigen Objekts (1) erstreckt, wenn es aus einer Richtung (z-Richtung) senkrecht zu dem blattförmigen Objekt (1) betrachtet wird; und
Projizieren von transmittiertem Licht, das das emittierte Licht, das durch das blattförmige Objekt transmittiert wird, oder von reflektiertem Licht ist, das das emittierte Licht wird, das von einer Oberfläche des blattförmigen Objekts (1), auf eine Projektionseinheit (4) reflektiert ist,
Erfassen eines Projektionsbildes, das auf die Projektionseinheit (4) projiziert wird, mit einer Bilderfassungseinheit (5), und
Erfassen eines auf dem blattförmigen Objekt (1) vorhandenen Fehlers aus dem auf die Projektionseinheit (4) projizierten Projektionsbild (7).

5. Inspektionsverfahren für das blattförmige Objekt (1) nach Anspruch 4, wobei als Fehler eine unregelmäßige Form erfasst wird, die sich in derselben Richtung wie die Transportrichtung des blattförmigen Objekts (1) erstreckt.

6. Inspektionsverfahren für das blattförmige Objekt (1) nach Anspruch 4 oder 5, wobei das von der linearen Lichtquelle (3) zu emittierende Licht emittiert wird, sodass eine optische Achse (8) des Lichts senkrecht zur Transportrichtung des blattförmigen Objekts (1) ist.

7. Inspektionsverfahren für das blattförmige Objekt (1) nach einem der Ansprüche 4 bis 6, wobei Licht von außerhalb eines Bereichs, der sich in einer Richtung senkrecht zu einer Bewegungsfläche des blattförmigen Objekts (1) erstreckt, emittiert wird, während eine Blattbreite des blattförmigen Objekts (1) gehalten wird, und ein Projektionsbild (7) transmittierten Lichts oder reflektierten Lichts auf die Projektionseinheit (4) außerhalb dieses Bereichs projiziert wird.

## Revendications

1. Dispositif d'inspection pour un objet en feuille (1) qui est transporté en continu, le dispositif d'inspection comprenant :
une source de lumière linéaire (3) qui s'étend dans une direction longitudinale, où la source de lumière linéaire est configurée pour irradier l'objet en feuille (1) avec une lumière d'irradiation ;
une unité de projection (4) sur laquelle la lumière transmise ou la lumière réfléchie depuis l'objet en feuille est projetée ;
une unité de capture d'image (5) configurée pour capturer une image de projection (7) projetée sur l'unité de projection (4) ; et
une unité de traitement de données (6) configurée pour détecter un défaut présent sur l'objet en feuille (1) à partir de données d'image capturées par l'unité de capture d'image (5), dans lequel
la direction longitudinale de la source de lumière linéaire (3) vue depuis une direction (direction z) perpendiculaire à une surface de déplacement de l'objet en feuille (1) est la même qu'une direction de transport (direction y) de l'objet en feuille (1), et la source de lumière linéaire (3) est configurée pour émettre une lumière se propageant dans une direction de largeur de feuille (direction x) de l'objet en feuille (1).

2. Dispositif d'inspection pour l'objet en feuille (1) selon la revendication 1, dans lequel le dispositif d'inspection est agencé de sorte qu'une surface parallèle à la surface de déplacement de l'objet en feuille (1) et une ligne parallèle à la direction longitudinale de la source de lumière linéaire (3) soient parallèles l'une à l'autre.

3. Dispositif d'inspection pour l'objet en feuille (1) selon la revendication 1 ou 2, dans lequel la source de lumière linéaire (3), l'unité de projection (4) et l'unité de capture d'image (5) sont agencées de sorte qu'elles puissent être installées à l'extérieur d'une région s'étendant dans une direction perpendiculaire à la surface de déplacement de l'objet en feuille (1), tout en conservant une largeur de feuille de l'objet en feuille (1).

4. Procédé d'inspection pour un objet en feuille (1), le procédé d'inspection comprenant :
l'émission d'une lumière se propageant dans une direction de largeur de feuille (direction x) sur l'objet en feuille (1) qui est transporté en continu, à partir d'une source de lumière linéaire (3) dont la direction longitudinale s'étend dans la même direction qu'une direction de transport (direction y) de l'objet en feuille (1) lorsqu'on regarde depuis une direction (direction z) perpendiculaire à l'objet en feuille (1) ; et
la projection de la lumière transmise qui est la lumière émise transmise à travers l'objet en feuille ou de la lumière réfléchie qui est la lumière émise réfléchie depuis une surface de l'objet en feuille (1) sur une unité de projection (4),
la capture d'une image de projection projetée sur l'unité de projection (4) avec une unité de capture d'image (5), et
la détection d'un défaut présent sur l'objet en feuille (1) à partir de l'image de projection (7) projetée sur l'unité de projection (4).

5. Procédé d'inspection pour l'objet en feuille (1) selon la revendication 4, dans lequel une forme irrégulière s'étendant dans la même direction que la direction de transport de l'objet en feuille (1) est détectée comme étant le défaut.

6. Procédé d'inspection pour l'objet en feuille (1) selon la revendication 4 ou 5, dans lequel la lumière devant être émise depuis la source de lumière linéaire (3) est émise de sorte qu'un axe optique (8) de la lumière soit perpendiculaire à la direction de transport de l'objet en feuille (1).

7. Procédé d'inspection pour l'objet en feuille (1) selon l'une quelconque des revendications 4 à 6, dans lequel la lumière est émise depuis l'extérieur d'une région s'étendant dans une direction perpendiculaire à une surface de déplacement de l'objet en feuille (1), tandis que la largeur de feuille de l'objet en feuille (1) est conservée, et une image de projection (7) de la lumière transmise ou de la lumière réfléchie est projetée sur l'unité de projection (4) à l'extérieur de la région.
